# DEMANDE DE BREVET EUROPEEN

(11) **EP 2 383 500 A1**
(43) Date de publication de la demande: **02.11.2011**
(21) Numéro de dépôt: 11163648.6
(22) Date de dépôt: 26.04.2011
(51) Int. Cl.: F16L 23/14, F16L 51/02

(54) **Manchette de raccordement et procédé de fabrication de celle-ci**

(30) Priorité: 29.04.2010 FR 1053317
(71) Demandeur: Fabrication Générale pour la Maintenance, 01600 Reyrieux (FR)
(72) Inventeur: Mirat, Didier, 69004, LYON (FR)
(74) Mandataire: Jeannet, Olivier

(57) **Abrégé**

Cette manchette de raccordement (1) comprend un corps tubulaire (2) en matériau souple et au moins une bride (3) carrée ou rectangulaire de raccordement, reliée à une extrémité dudit corps tubulaire (2), cette bride (3) étant formée de quatre éléments allongés rigides (5) comprenant chacun une aile de liaison (15) audit corps (2) et une aile de raccordement (16) destinée à permettre le raccordement de la manchette (1) à une bride (3) que comprend un appareil ou une conduite à raccorder.

Selon l'invention, les ailes de liaison (15) d'au moins deux éléments allongés rigides (5) ont des longueurs telles que ces ailes de liaison (15) sont aptes, après assemblage des quatre éléments allongés rigides (5), à s'étendre le long des tranches des ailes de liaison (15) des deux autres éléments allongés rigides (5), de telle sorte qu'il existe de larges surfaces de contact des extrémités longitudinales des ailes de liaison (15) les unes avec les autres.

## Description

La présente invention concerne une manchette de raccordement et un procédé de fabrication de celle-ci.

Il est connu d'utiliser une manchette souple de raccordement pour raccorder un appareil à une conduite ou deux conduites entre elles. Une telle manchette, utilisée par tous genres d'industries, notamment dans des installations de climatisation, a notamment pour fonction d'absorber les vibrations générées par l'appareil, afin de ne pas les transmettre à la conduite, d'absorber les imprécisions des positions de montage de l'appareil et de la conduite l'une par rapport à l'autre, et d'absorber des éventuelles variations dimensionnelles que peuvent subir les conduites, notamment par suite de variations de température.

Une telle manchette comprend un corps tubulaire en matériau souple, notamment à armature en fibres tissées enduite d'un revêtement étanche, et deux brides rigides de raccordement, reliées aux extrémités du corps tubulaire.

Une manchette de raccordement existante comprend des brides formées par des plats métalliques qui sont engagés dans des fourreaux aménagés aux extrémités du corps tubulaire.

D'autres manchettes comprennent des brides carrées ou rectangulaires formées par assemblage d'éléments allongés rigides en cornière, c'est-à-dire comprenant des ailes de liaison qui s'étendent le long de la paroi du corps tubulaire, notamment à l'intérieur de celui-ci, et permettent d'assurer la liaison des brides à ce corps tubulaire, et des ailes de raccordement, qui s'étendent sensiblement perpendiculairement à l'axe du conduit délimité par le corps tubulaire et permettent de raccorder la manchette à la conduite et à l'appareil.

Ces manchettes existantes ont pour inconvénient de ne pas présenter une étanchéité très élevée au niveau des angles formés par le corps tubulaire à proximité des brides, conduisant soit à des fuites du fluide traversant la manchette, lorsque l'intérieur de la manchette est en surpression, soit à une aspiration du milieu environnant dans le conduit délimité par le corps tubulaire, lorsque l'intérieur de la manchette est en dépression. Dans ce deuxième cas, des poussières ou autres débris indésirables peuvent s'introduire dans l'installation.

Un autre inconvénient existant avec ce type de manchette de raccordement est l'usure du matériau constituant le corps tubulaire au niveau de ces mêmes angles, notamment sous l'effet des vibrations générées par l'appareil ou des mises en tension répétées subies par le corps tubulaire lors des mises en surpression ou en dépression du corps tubulaire de la manchette.

La présente invention vise à remédier à ces différents inconvénients.

Le document N° US 5,865,478 décrit un dispositif comprenant un corps tubulaire et au moins une bride carrée de raccordement reliée à une extrémité du corps tubulaire, chaque bride comprenant quatre supports à section en forme de L. Chacun de ces supports comprend un "panneau" orienté à 45° par rapport au reste du support, les panneaux de deux supports consécutifs venant au contact l'un de l'autre, au niveau des angles de la bride, lorsque les quatre supports sont assemblés les uns aux autres.

Cette solution ne semble pas optimale pour remédier aux inconvénients précités, en particulier eu égard à la complexité et au coût d'obtention des supports, ainsi qu'à l'étanchéité perfectible de la bride au niveau des angles de cette dernière.

Le document N° DE 23 53 625 décrit un assemblage de bride pour un conduit rigide en aluminium, avec une étanchéité réalisée par des joints, ce qui n'est pas adaptable au domaine de la présente invention, dans laquelle le corps tubulaire est en matériau souple, et qui, d'une manière générale, ne remédie pas aux inconvénients précités.

Les mêmes commentaires que ci-dessus peuvent être formulés s'agissant du document N° DE 75 13 018 U.

La manchette de raccordement concernée par l'invention comprend, de manière connue en soi, un corps tubulaire en matériau souple et au moins une bride carrée ou rectangulaire de raccordement, reliée à une extrémité dudit corps, cette bride étant formée de quatre éléments allongés rigides comprenant chacun une aile de liaison audit corps et une aile de raccordement destinée à permettre le raccordement de la manchette à une bride que comprend un appareil ou une conduite à raccorder.

Selon invention, les ailes de liaison d'au moins deux éléments allongés rigides ont des longueurs telles que ces ailes de liaison s'étendent, après assemblage des quatre éléments allongés rigides, le long des tranches des ailes de liaison des deux autres éléments allongés rigides, de telle sorte qu'il existe de larges surfaces de contact des extrémités longitudinales des ailes de liaison les unes avec les autres.

L'inventeur a en effet pu déterminer que le défaut d'étanchéité des manchettes selon la technique antérieure résultait de l'existence d'espaces vides ou d'interstices entre les extrémités longitudinales des ailes de liaison des éléments rigides formant les brides de ces manchettes, ces espaces vides ou interstices communiquant avec l'extérieur du conduit délimité par le corps tubulaire de cette manchette. L'invention réalise au contraire une venue de l'extrémité longitudinale de l'aile de liaison d'un élément allongé rigide en contact et en "emboîtement" avec la tranche de l'aile de liaison de l'élément allongé rigide consécutif sur la bride, supprimant ainsi tout espace vide ou interstice entre ces ailes de liaison et réduisant de ce fait fortement, voire éliminant, le défaut d'étanchéité constaté.

Il sera compris que par "tranche" on entend une paroi substantiellement perpendiculaire à la direction longitudinale d'un élément, formant une face qui correspond à l'épaisseur de l'élément.

Selon une possibilité, deux éléments allongés rigides destinés à se trouver sur deux côtés opposés de la bride comprennent des ailes de liaison ayant une longueur correspondant à la longueur nominale des côtés correspondants du corps tubulaire, tandis que les deux autres éléments allongés rigides comprennent des ailes de liaison dont les longueurs sont égales à la longueur nominale des côtés correspondants du corps tubulaire diminuée des épaisseurs des ailes de liaison des deux autres éléments allongés rigides.

Selon une autre possibilité, chaque élément allongé rigide comprend une aile de liaison ayant une longueur égale à la longueur nominale du côté correspondant du corps tubulaire diminuée de l'épaisseur de l'aile de liaison de l'élément allongé rigide destiné à être placé de manière consécutive sur la bride.

Selon une autre caractéristique de l'invention, chaque aile de liaison comprend un bord arrondi entre chacun de ses bords d'extrémités longitudinales et son bord longitudinal libre, c'est-à-dire son bord longitudinal opposé à celui relié à l'aile de raccordement, adapté à éliminer tout angle vif risquant de porter trop ponctuellement contre le matériau constituant le corps tubulaire de la manchette, et à réduire ainsi fortement, voire à éliminer, l'usure de ce matériau aux angles que forme le corps tubulaire au niveau de son raccordement à la bride.

Le rayon de cet arrondi est en général variable selon les dimensions de la manchette concernée ; en pratique, il sera compris entre environ un sixième et la moitié de la largeur de l'aile de liaison qui comporte cet arrondi.

De préférence, l'aile de raccordement de chaque élément allongé rigide comprend une extrémité longitudinale délimitée par un bord oblique orienté à quarante-cinq degrés par rapport à l'axe longitudinal de l'élément rigide, de telle sorte que les extrémités longitudinales des ailes de raccordement de deux éléments rigides destinés à être placés de manière consécutive sur la bride viennent à proximité immédiate l'une de l'autre.

Les ailes de raccordement de la manchette selon l'invention s'étendent ainsi au niveau des angles des brides, formant une surface de raccordement continue.

Le procédé selon l'invention comprend les étapes consistant :
- à découper, dans une plaque de matériau rigide mais pliable, des pièces de matériau formant des ébauches desdits éléments allongés rigides, cette découpe étant réalisée de telle sorte que :
   (i) les extrémités longitudinales de premières parties de ces pièces destinées à constituer les ailes de liaison soient définies par des bords transversaux, perpendiculaires à l'axe longitudinal de ces premières parties ;
   (ii) les extrémités longitudinales de deuxièmes parties de ces pièces destinées à constituer les ailes de raccordement soient définies par des bords obliques, orientés sensiblement à quarante-cinq degrés par rapport à l'axe longitudinal de ces deuxièmes parties ; et
   (iii) il existe au niveau d'au moins une extrémité de chacune de ces pièces un décrochement entre le bord transversal de ladite première partie de cette pièce et le bord oblique de ladite deuxième partie de cette pièce, ayant une hauteur sensiblement égale à l'épaisseur de ladite plaque de matériau rigide ;
- à plier sensiblement à angle droit chacune desdites pièces le long de la ligne de raccordement de ladite première partie d'une pièce à ladite deuxième partie de cette pièce.

Ce procédé permet ainsi d'obtenir des éléments rigides comprenant à la fois des ailes de liaison à bords d'extrémité transversaux et des ailes de raccordement à bords d'extrémité obliques, avec un ou deux décrochements permettant aux ailes de liaison de présenter les longueurs adaptées précitées permettant de réaliser les venues en contact réciproques des extrémités des ailes de liaison.

De préférence, le procédé comprend l'étape consistant à aménager, pour chaque pièce formant ébauche, un bord arrondi entre chaque bord transversal d'extrémité d'une dite première partie et le bord longitudinal libre de cette première partie, c'est-à-dire le bord de cette première partie opposé à celui relié à ladite deuxième partie.

L'invention sera bien comprise, et d'autres caractéristiques et avantages de celle-ci apparaîtront, en référence au dessin schématique annexé, représentant, à titre d'exemples non limitatifs, deux formes de réalisation possibles de la manchette de raccordement concernée.
La figure 1 est une vue en perspective partiellement éclatée de la manchette selon une première forme de réalisation, c'est-à-dire avec des éléments allongés rigides 5 comprenant des décrochements 18 à une seule de leurs extrémités longitudinales ;
la figure 2 est une vue du détail de la figure 1 entouré d'un cercle, à échelle agrandie ;
la figure 3 est une vue à plat de deux pièces formant ébauche destinées à constituer deux des quatre éléments allongés rigides formant une bride de raccordement que comprend cette manchette, ces deux éléments allongés rigides étant consécutifs l'un de l'autre sur cette bride ;
la figure 4 est une vue des deux éléments allongés rigides obtenus par pliage des pièces formant ébauche montrées sur la figure 3, dans la position d'assemblage qu'ils occupent sur la bride ;
la figure 5 est une vue en perspective de la manchette assemblée ;
la figure 6 est une vue de la manchette en coupe selon la ligne VI-VI de la figure 5, et
la figure 7 est une vue de la manchette similaire à la figure 6, selon la deuxième forme de réalisation, c'est-à-dire avec deux éléments allongés rigides 5 comprenant des décrochements 18 à leurs deux extrémités longitudinales et deux éléments allongés rigides 5 dépourvus de tels décrochements 18.

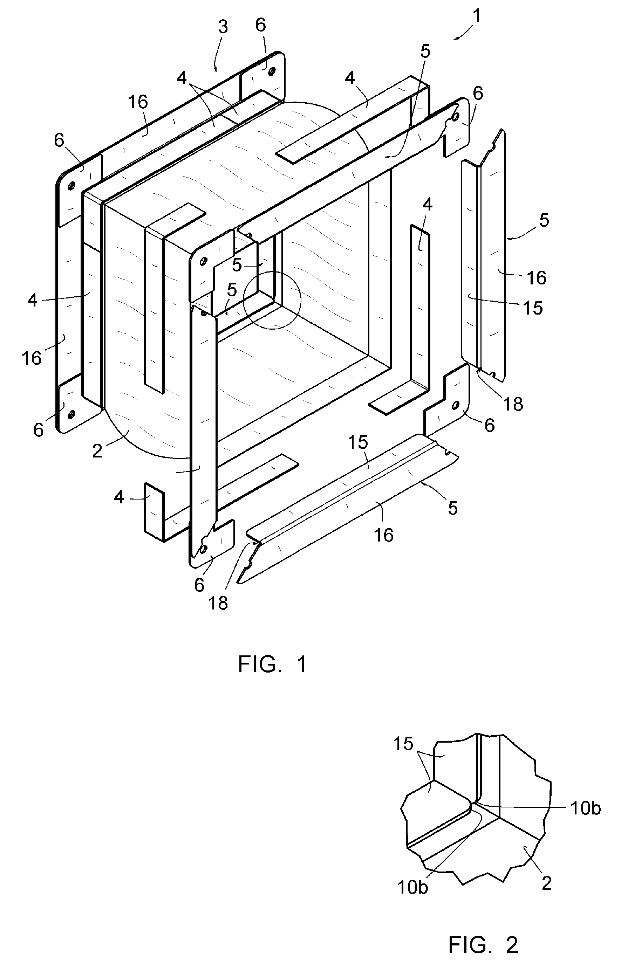

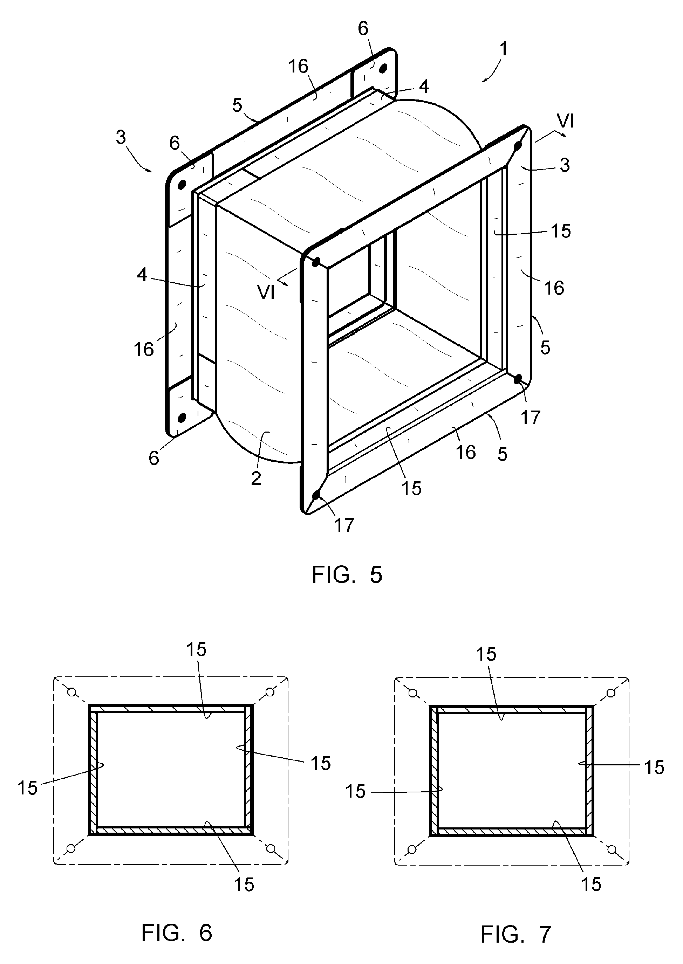

Les figures 1 et 5 représentent une manchette 1 de raccordement, destinée à raccorder un appareil à une conduite ou deux conduites entre elles, notamment dans une installation industrielle ou une installation de climatisation.

La manchette 1 comprend un corps tubulaire 2 en matériau souple, deux brides rigides 3 de raccordement, reliées aux extrémités du corps tubulaire 2, et, dans l'exemple représenté, des bandes 4 formant des contreplaques de fixation des brides 3 à ce corps tubulaire 2.

Ce dernier est notamment en un matériau du type à armature en fibres tissées enduite d'un revêtement étanche.

Comme cela est représenté, chaque bride 3 est formée par l'assemblage de quatre éléments allongés rigides 5 solidarisés les uns aux autres par des pièces d'angle 6. Ces éléments 5 et pièces 6, de même que les bandes 4, sont en matériau métallique.

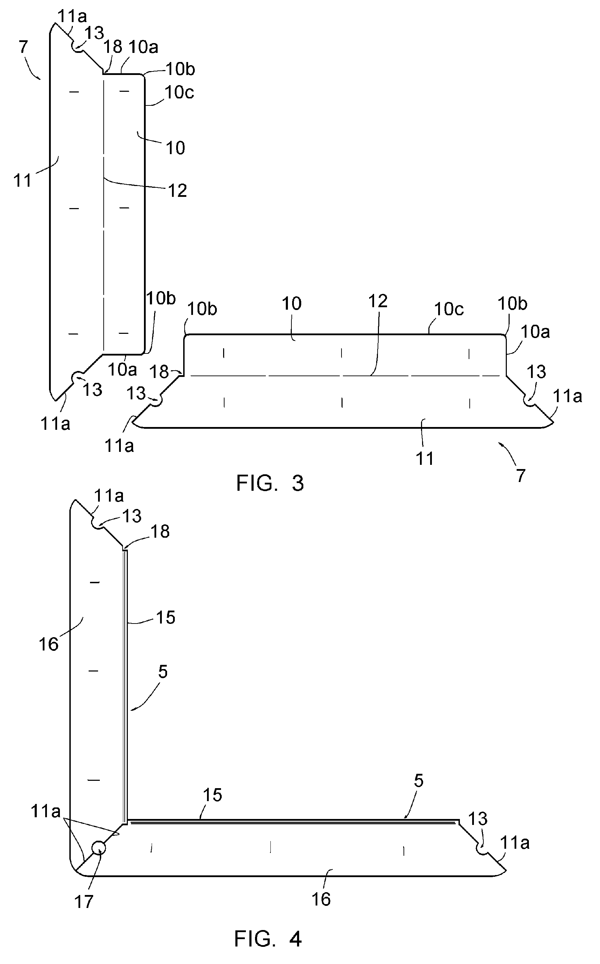

Les éléments 5 sont obtenus par découpe et pliage de pièces de tôle, et la figure 3 montre les deux pièces 7 destinées à constituer deux des quatre éléments 5, ces deux éléments 5 étant consécutifs l'un de l'autre sur la bride 3.

Chaque pièce 7 est découpée de manière à aménager une première partie 10 et une deuxième partie 11 séparées par une ligne de pliage fictive longitudinale 12. En référence aux figures 1, 4 et 5, il apparaît que ladite première partie 10 est destinée à former, sur chaque élément 5, une aile 15 de liaison de cet élément 5 au corps tubulaire 2, destinée à venir contre la paroi de ce corps, à l'intérieur du conduit délimité par celui-ci et à être fixée à cette paroi. Il apparaît de la même façon que ladite deuxième partie 11 est destinée à former, sur chaque élément 5, une aile 16 de raccordement, destinée à permettre le raccordement de la bride 3 au siège de raccordement correspondant de l'appareil ou de la conduite à raccorder.

Ladite première partie 10 présente des extrémités longitudinales définies par des bords 10a transversaux, perpendiculaires à l'axe longitudinal de cette première partie, et comprend des bords arrondis 10b entre ces bords 10a et son bord longitudinal libre 10c, c'est-à-dire son bord longitudinal opposé à celui relié à ladite deuxième partie 11.

Cette dernière présente des extrémités longitudinales définies par des bords obliques 11a, orientés sensiblement à quarante-cinq degrés par rapport à son axe longitudinal, dans lesquels sont aménagées des encoches hémicirculaires 13.

Il apparaît également sur la figure 3 que chaque pièce 7 comprend, au niveau de l'une de ses extrémités longitudinales (extrémité de gauche pour la pièce s'étendant horizontalement et extrémité supérieure pour la pièce s'étendant verticalement) un décrochement 18 entre le bord transversal 10a de ladite première partie 10 et le bord oblique 11 a de ladite deuxième partie 11. Ce décrochement 18 a une hauteur sensiblement égale à l'épaisseur de la tôle dans laquelle les pièces 7 sont découpées.

Il se comprend que les extrémités des bords obliques 11 a situées du côté de la ligne de pliage 12 sont à une distance l'une de l'autre correspondant à la longueur nominale intérieure du côté correspondant du corps tubulaire 2, auquel l'élément 5 considéré est destiné à être relié.

Pour constituer les éléments 5, comme cela est visible sur la figure 4, les pièces 7 montrées sur la figure 3 sont pliées sensiblement à angle droit le long de la ligne 12.

Les éléments 5 sont ensuite assemblés au moyen des pièces 6 pour constituer la bride 3. Comme cela apparaît sur les figures 1, 4 et 5, lors de cet assemblage, les bords obliques 11a viennent à proximité immédiate les uns des autres, et les encoches 13 de deux bords 11 a adjacents forment conjointement des trous 17 destinés à recevoir des organes de fixation de la bride au siège de raccordement de l'appareil ou de la conduite à raccorder (les pièces d'angles 6 comprennent des trous identiques, venant en coïncidence des trous 17). Dans cette même position d'assemblage, ainsi que le montre la figure 4, l'aile de liaison 15 de l'extrémité longitudinale d'un élément 5 dépourvue du décrochement 18 vient prendre place dans le logement aménagé par le décrochement 18 de l'extrémité longitudinale de l'élément 5 adjacent, réalisant ainsi un "emboîtement" des ailes de liaison 15 de ces deux éléments 5 consécutifs. Ainsi que cela apparaît schématiquement sur la figure 6, cet emboîtement est tel que l'aile de liaison 15 du premier élément 5 cité est en contact avec la tranche de l'aile de liaison 15 du deuxième élément 5 cité ; il n'existe donc aucun espace ou interstice entre les tranches des ailes de liaison 15 adjacentes.

Il apparaît également sur la figure 2 que les bords arrondis 10b de deux ailes de liaison 15 adjacentes permettent d'éliminer, du côté de l'intérieur du conduit délimité par le corps tubulaire 2, tout angle vif risquant de porter trop ponctuellement contre le matériau constituant ce corps tubulaire 2.

La figure 7 montre une deuxième forme de réalisation de l'invention, selon laquelle deux éléments allongés rigides 5 destinés à se trouver sur deux côtés opposés de la bride 3 (il s'agit des éléments de gauche et de droite sur cette figure) comprennent des ailes de liaison 15 ayant une longueur correspondant à la longueur nominale des côtés d'assemblage correspondants du corps tubulaire souple 2, tandis que les deux autres éléments allongés rigides 5 comprennent des ailes de liaison 15 dont les longueurs sont égales à la longueur nominale des côtés correspondants du corps 2 diminuée des épaisseurs des ailes de liaison 15 des deux autres éléments allongés rigides 5.

Comme cela apparaît de ce qui précède, l'invention fournit une manchette de raccordement 1 ayant, par rapport aux manchettes homologues de la technique antérieure, les avantages déterminants :
- de réaliser une venue des extrémités longitudinales des ailes de liaison 15 en contact ("emboîtement") les unes des autres, supprimant les espaces vides ou interstices existants entre ces extrémités dans les manchettes de la technique antérieure, et réduisant de ce fait fortement, voire éliminant, le défaut d'étanchéité constaté sur ces manchettes à cet endroit ; et
- grâce aux angles arrondis 10b, d'éliminer tout angle vif du côté de l'intérieur du conduit délimité par le corps tubulaire 2, qui risquerait de porter trop ponctuellement contre le matériau constituant ce corps 2, réduisant ainsi fortement, voire éliminant, l'usure de ce matériau aux angles que forme le corps 2 au niveau de son raccordement à une bride 3.

L'invention a été décrite ci-dessus en référence à une forme de réalisation fournie à titre d'exemple. Il va de soi que n'est pas limitée à cette forme de réalisation mais qu'elle s'étend à toutes les autres formes de réalisation couvertes par les revendications ci-annexées.

## Revendications

1. Manchette de raccordement (1), comprenant un corps tubulaire (2) en matériau souple et au moins une bride (3) carrée ou rectangulaire de raccordement, reliée à une extrémité dudit corps tubulaire (2), cette bride (3) étant formée de quatre éléments allongés rigides (5) comprenant chacun une aile de liaison (15) audit corps (2) et une aile de raccordement (16) destinée à permettre le raccordement de la manchette (1) à une bride (3) que comprend un appareil ou une conduite à raccorder ;
**caractérisée en ce que** les ailes de liaison (15) d'au moins deux éléments allongés rigides (5) ont des longueurs telles que ces ailes de liaison (15) s'étendent, après assemblage des quatre éléments allongés rigides (5), le long des tranches des ailes de liaison (15) des deux autres éléments allongés rigides (5), de telle sorte qu'il existe de larges surfaces de contact des extrémités longitudinales des ailes de liaison (15) les unes avec les autres.

2. Manchette de raccordement (1) selon la revendication 1, **caractérisée en ce que** deux éléments allongés rigides (5) destinés à se trouver sur deux côtés opposés de la bride (3) comprennent des ailes de liaison (15) ayant une longueur correspondant à la longueur nominale des côtés correspondants du corps tubulaire (2), tandis que les deux autres éléments allongés rigides (5) comprennent des ailes de liaison (15) dont les longueurs sont égales à la longueur nominale des côtés correspondants du corps tubulaire (2) diminuée des épaisseurs des ailes de liaison (15) des deux autres éléments allongés rigides (5).

3. Manchette de raccordement (1) selon la revendication 1, **caractérisée en ce que** chaque élément allongé rigide (5) comprend une aile de liaison (15) ayant une longueur égale à la longueur nominale du côté correspondant du corps tubulaire (2) diminuée de l'épaisseur de l'aile de liaison (15) de l'élément allongé rigide (5) destiné à être placé de manière consécutive sur la bride (3).

4. Manchette de raccordement (1) selon l'une des revendications 1 à 3, **caractérisée en ce que** chaque aile de liaison (15) comprend un bord arrondi (10b) entre chacun de ses bords (10a) d'extrémités longitudinales et son bord longitudinal libre (10c), c'est-à-dire son bord longitudinal opposé à celui relié à l'aile de raccordement (16), adapté à éliminer tout angle vif risquant de porter trop ponctuellement contre le matériau constituant le corps tubulaire (2) de la manchette, et à réduire ainsi fortement, voire à éliminer, l'usure de ce matériau aux angles que forme le corps tubulaire (2) au niveau de son raccordement à la bride (3).

5. Manchette de raccordement (1) selon l'une des revendications 1 à 4, **caractérisée en ce que** l'aile de raccordement (16) de chaque élément allongé rigide (5) comprend une extrémité longitudinale délimitée par un bord oblique (11 a) orienté à quarante-cinq degrés par rapport à l'axe longitudinal de l'élément allongé rigide (5), de telle sorte que les extrémités longitudinales des ailes de raccordement (16) de deux éléments allongés rigides (5) destinés à être placés de manière consécutive sur la bride (3) viennent à proximité immédiate l'une de l'autre.

6. Procédé de fabrication de la manchette de raccordement (1) selon la revendication 5, **caractérisé en ce qu'**il comprend les étapes consistant :
- à découper, dans une plaque de matériau rigide mais pliable, des pièces de matériau (7) formant des ébauches desdits éléments allongés rigides (5), cette découpe étant réalisée de telle sorte que :
(i) les extrémités longitudinales de premières parties (10) de ces pièces (7) destinées à constituer les ailes de liaison (15) soient définies par des bords transversaux (10a), perpendiculaires à l'axe longitudinal de ces premières parties (10) ;
(ii) les extrémités longitudinales de deuxièmes parties (11) de ces pièces (7) destinées à constituer les ailes de raccordement (16) soient définies par des bords obliques (11a), orientés sensiblement à quarante-cinq degrés par rapport à l'axe longitudinal de ces deuxièmes parties (11) ; et
(iii) il existe au niveau d'au moins une extrémité de chacune de ces pièces (7) un décrochement (18) entre le bord transversal (10a) de ladite première partie (10) de cette pièce (7) et le bord oblique (11a) de ladite deuxième partie (11) de cette pièce (7), ayant une hauteur sensiblement égale à l'épaisseur de ladite plaque de matériau rigide ;
- à plier sensiblement à angle droit chacune desdites pièces (7) le long de la ligne de raccordement de ladite première partie (10) d'une pièce à ladite deuxième partie (11) de cette pièce (7).

7. Procédé selon la revendication 6, **caractérisé en ce qu'**il comprend l'étape consistant à aménager, pour chaque pièce (7) formant ébauche, un bord arrondi (10b) entre chaque bord transversal d'extrémité (10a) d'une dite première partie (10) et le bord longitudinal libre (10c) de cette première partie (10), c'est-à-dire le bord de cette première partie opposé à celui relié à ladite deuxième partie (11).
